(19) **Europäisches Patentamt**
**European Patent Office**
**Office européen des brevets**

(11) **EP 2 344 902 B1**

(12) **FASCICULE DE BREVET EUROPEEN**

(45) Date de publication et mention
de la délivrance du brevet:
**15.06.2016 Bulletin 2016/24**

(21) Numéro de dépôt: **09745061.3**

(22) Date de dépôt: **04.11.2009**

(51) Int Cl.:
*G01S 3/14* (2006.01)     *G01S 3/28* (2006.01)
*H01Q 21/20* (2006.01)     *H01Q 7/00* (2006.01)
*G01S 3/02* (2006.01)     *G01S 3/08* (2006.01)

(86) Numéro de dépôt international:
**PCT/EP2009/064596**

(87) Numéro de publication internationale:
**WO 2010/052234 (14.05.2010 Gazette 2010/19)**

(54) **PROCEDE DE DETERMINATION DE LA DIRECTION D'ARRIVEE EN GISEMENT D'UNE ONDE ELECTROMAGNETIQUE HAUTES FREQUENCES**

VERFAHREN ZUR BESTIMMUNG DER ANKUNFTSRICHTUNG IM HINBLICK AUF LAGE EINER HOCHFREQUENTEN ELEKTROMAGNETISCHEN WELLE

METHOD OF DETERMINING THE DIRECTION OF ARRIVAL IN TERMS OF BEARING OF A HIGH-FREQUENCY ELECTROMAGNETIC WAVE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.11.2008 FR 0806234**

(43) Date de publication de la demande:
**20.07.2011 Bulletin 2011/29**

(73) Titulaire: **THALES**
**92400 Courbevoie (FR)**

(72) Inventeurs:
• **LECCA, Arnaud**
**92704 Colombes Cedex (FR)**
• **MERLET, Eric**
**F-92700 Colombes (FR)**
• **MESNAGE, Jean-Christophe**
**F-95300 Pontoise (FR)**
• **ROGIER, Jean-Luc**
**F-95120 Ermont (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 5 124 711     US-A1- 2008 012 765
US-B1- 6 300 905**

• **SCHMIDT R O: "MULTIPLE EMITTER LOCATION AND SIGNAL PARAMETER ESTIMATION" IEEE TRANSACTIONS ON ANTENNAS AND PROPAGATION, IEEE SERVICE CENTER, PISCATAWAY, NJ, US, vol. AP-34, no. 3, 1 mars 1986 (1986-03-01), pages 276-280, XP000644956 ISSN: 0018-926X**
• **BIEDKA T E ET AL: "Direction finding methods for CDMA systems" SIGNALS, SYSTEMS AND COMPUTERS, 1996. CONFERENCE RECORD OF THE THIRTIE TH ASILOMAR CONFERENCE ON PACIFIC GROVE, CA, USA 3-6 NOV. 1996, LOS ALAMITOS, CA, USA,IEEE COMPUT. SOC, US, vol. 1, 3 novembre 1996 (1996-11-03), pages 637-641, XP010231506 ISBN: 978-0-8186-7646-8**

**Description**

La présente invention concerne un procédé de détermination de la direction d'arrivée en gisement d'une onde électromagnétique hautes fréquences, c'est à dire dans la bande HF. Elle s'applique notamment à la détection d'émetteurs de signaux électromagnétiques à courtes et moyennes distances de l'ordre de quelques centaines de kilomètres ou moins, plus particulièrement dans le domaine naval.

Pour déterminer la direction d'arrivée d'un signal électromagnétique, il est souhaitable que l'antenne utilisée pour capter ledit signal soit grande devant la longueur d'onde du signal. Par exemple, pour un signal HF, la taille de l'antenne devrait pouvoir théoriquement atteindre plusieurs centaines de mètres. Aussi, lorsque la mesure de direction d'arrivée du signal est effectuée à partir d'une plate-forme de taille limitée telle qu'un navire ou une base maritime, l'antenne utilisée est généralement pourvue d'une géométrie particulière permettant de limiter ses dimensions. Le plus souvent, l'antenne comporte un monopôle et deux cadres croisés, ce type d'antenne étant souvent qualifiée « d'antenne Watson-Watt », qualification due à l'algorithme éponyme classiquement utilisé pour déterminer l'angle de gisement d'un signal incident.

Cependant, lorsque à partir d'une plate-forme terrestre ou maritime, on souhaite déterminer la direction d'arrivée d'un signal électromagnétique issu d'un émetteur distant placé au niveau du sol, autrement dit, lorsqu'on souhaite déterminer l'angle de gisement d'arrivée d'un signal à angle de site nul ou quasi-nul, les mesures sont parfois biaisées par la détection d'ondes ayant des angles de site non nuls et une polarisation non verticale. En effet, parfois, certaines ondes captées par l'antenne sont initialement émises depuis le sol, puis réfléchies par l'ionosphère qui modifie leur polarisation. L'application de l'algorithme de Watson-Watt conduit alors à l'obtention de valeurs de gisement erronées.

En outre, les mesures de direction d'arrivée d'un signal sont parfois perturbées par la présence, à proximité de l'antenne, de structures physiques occasionnant des réflexions et des couplages parasites. C'est par exemple le cas sur un navire, dont l'armature et les éléments extérieurs modifient l'environnement électromagnétique autour de l'antenne.

Enfin, les techniques connues telles que celle divulguée dans le brevet US6300905B1 ne permettent pas d'estimer la qualité d'une mesure d'angle de gisement obtenue. Il est donc impossible de distinguer les mesures fiables des mesures erronées.

Un but de l'invention est de déterminer, à partir d'une plate-forme de taille limitée, la direction d'arrivée en gisement d'une onde électromagnétique dans un environnement électromagnétique soumis à des réflexions parasites. A cet effet, l'invention a pour objet un procédé de mesure de l'angle d'arrivée en gisement θ de signaux radioélectriques en bande HF reçus par une antenne à cadres croisés ou un réseau antennaire de type Adcock, qui comporte au moins les étapes suivantes :

- lors d'une phase de calibration préparatoire, acquérir et enregistrer les mesures par l'antenne d'un signal de calibration variant en gisement et de fréquence fixe ou variable ;
- lors d'une phase de mesure de signaux détectés :

   o acquérir les signaux détectés sur au moins un canal de fréquence ;
   o pour chaque canal de fréquence $f_i$, corréler les signaux acquis avec les enregistrements issus de la calibration de fréquence proche de $f_i$ et déterminer la direction d'arrivée des signaux en recherchant l'angle de gisement θ pour lequel le maximum de corrélation est atteint.

L'environnement électromagnétique de l'antenne lors de la phase de calibration doit être proche de celui existant lors de la phase de mesure. Le procédé permet ainsi, en phase de mesure, de prendre naturellement en compte les particularités de l'environnement électromagnétique autour de l'antenne, particularités par exemple dues à la présence d'éléments perturbants à proximité de l'antenne.

Lors de la phase de calibration, chaque acquisition est enregistrée dans une table sous la forme d'un vecteur d'intercorrélation, les vecteurs de ladite table étant ensuite corrélés avec un autre vecteur d'intercorrélation issu des signaux acquis en phase de mesure, chacun desdits vecteurs d'intercorrélation étant calculé en exécutant au moins les étapes suivantes :

   o acquérir, au moins sur le cadre sinus et le cadre cosinus de l'antenne, N mesures de signaux, $N \geq 1$, sur une durée $\Delta t$ ;
   o pour p mesures parmi les N mesures effectuées précédemment, calculer un vecteur d'intercorrélation élémentaire $X_k$ ;
   o calculer un vecteur d'intercorrélation moyen X en moyennant les p vecteurs d'intercorrélation élémentaires $X_k$ calculés précédemment.

Moyenner plusieurs vecteurs d'intercorrélation élémentaires permet notamment de diminuer l'influence du bruit sur l'estimation des signaux acquis. En outre, le vecteur d'intercorrélation X peut être normalisé.

Un vecteur d'intercorrélation élémentaire $X_k$ issu d'une mesure de signaux k est égal à

$$X_k = \frac{1}{\left\| X_{0,k} \right\|^2} \cdot \begin{pmatrix} X_{0,k}.X_{0,k}^H \\ X_{0,k}.X_{c,k}^H \\ X_{0,k}.X_{s,k}^H \end{pmatrix},$$

$X_{0,k}$ étant la mesure complexe acquise sur le monopôle, $X_{c,k}$ étant la mesure complexe acquise sur le cadre cosinus, $X_{s,k}$ étant la mesure complexe acquise sur le cadre sinus, $^H$ étant l'opérateur hermitien.

Selon un mode de mise en oeuvre du procédé de mesure d'angle selon l'invention, le critère de corrélation croît avec le module du produit scalaire entre le vecteur d'intercorrélation des signaux détectés et le vecteur d'intercorrélation des signaux acquis pendant la phase de calibration. Le critère de corrélation peut, par exemple, être choisi égal à $|X_{norm} \cdot T(f, \theta_k)|^2$, $X_{norm}$ étant un vecteur d'intercorrélation normalisé calculé à partir des détections effectuées en phase de mesure, $T(f, \theta_k)$ étant un vecteur d'intercorrélation calculé à partir des détections effectuées en phase de calibration pour un signal de calibration de fréquence f et d'angle de gisement d'arrivée $\theta_k$, « · » représentant le produit scalaire complexe.

Le procédé de mesure d'angle selon l'invention peut comprendre une étape d'estimation de la qualité d'une mesure de gisement θ, une note de qualité Q étant attribuée à ladite mesure en fonction du niveau du maximum de corrélation obtenu, ladite note Q étant une fonction monotone croissante du maximum de corrélation. Un critère objectif et fiable pour évaluer la qualité d'une mesure est, par exemple, le niveau du pic de corrélation atteint lors de l'étape de corrélation.

Le procédé de mesure d'angle selon l'invention peut comprendre une étape d'identification des mesures erronées, un seuil minimal de corrélation étant choisi, une comparaison étant effectuée entre ledit seuil et la note de qualité Q attribuée à une mesure pour identifier une mesure dont la note de qualité Q est inférieure audit seuil, une telle mesure signifiant alors que la mesure de l'angle d'arrivée en gisement θ est vraisemblablement erronée.

Selon un mode de mise en oeuvre du procédé de mesure d'angle selon l'invention, l'antenne est fixée sur un navire, la phase de calibration étant effectuée en émettant des signaux à partir d'un émetteur fixe disposé sensiblement au niveau de la mer, de sorte que les signaux émis soient reçus par l'antenne à site quasi-nul, le navire se déplaçant à distance dudit émetteur en changeant de cap pour faire varier les angles de gisement d'arrivée du signal par rapport à l'antenne.

Selon un mode de mise en oeuvre du procédé de mesure d'angle selon l'invention, lors de la phase de calibration, le signal de calibration est émis de sorte que l'angle de site d'arrivée dudit signal sur l'antenne à cadres croisés est sensiblement constant.

L'invention a également pour objet un procédé de surveillance mis en oeuvre sur une plate-forme en mer ou au sol, ledit procédé comportant au moins les étapes suivantes :

  o à angle de site sensiblement nul, définir une plage de directions en gisement $[\theta_i ; \theta_f]$ à surveiller ;
  o si des signaux sont détectées, exécuter les étapes du procédé de mesure de la direction d'arrivée en gisement tel que décrit plus haut ;
  o si un signal est détecté dans la plage surveillée, déclencher une commande d'alerte.

L'invention a également pour objet un goniomètre mettant en oeuvre le procédé de mesure tel que décrit plus haut.

L'invention a également pour objet un système de surveillance disposé sur un navire et mettant en oeuvre le procédé de surveillance tel que décrit plus haut.

D'autres caractéristiques apparaîtront à la lecture de la description détaillée donnée à titre d'exemple et non limitative qui suit faite en regard de dessins annexés qui représentent :

- les figures 1 a et 1 b, une vue en perspective et de dessus d'un premier exemple d'antenne à cadres croisés recevant les signaux traités par le procédé de mesure d'angle selon l'invention,
- les figures 2a et 2b, une vue en perspective et de dessus d'un deuxième exemple d'antenne à cadres croisés recevant les signaux traités par le procédé de mesure d'angle selon l'invention,
- la figure 3, un synoptique présentant les étapes d'un procédé de mesure d'angle selon l'invention,
- la figure 4, un tableau illustrant une table de calibration utilisée lors de l'exécution d'un procédé de mesure d'angle selon l'invention,
- la figure 5, un graphique illustrant une courbe de corrélation obtenue par l'exécution d'un procédé de mesure d'angle selon l'invention,
- la figure 6, un synoptique présentant les étapes d'une deuxième mise en oeuvre du procédé de mesure d'angle selon l'invention.

Dans un souci de clarté de la description, les mêmes références dans des figures différentes désignent les mêmes éléments.

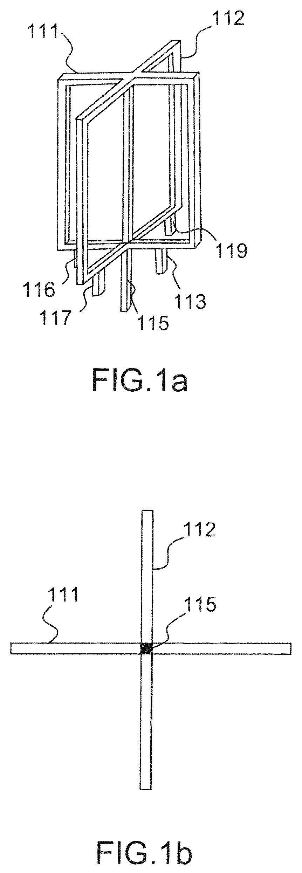

Les figures 1 a et 1 b présentent un premier exemple d'antenne à cadres croisés recevant les signaux traités par le procédé de mesure d'angle selon l'invention. La figure 1 a est une vue en perspective de l'antenne, la figure 1b montrant l'antenne vue de dessus.

L'antenne 100 comporte un premier cadre 111 orthogonal à un second cadre 112, les deux cadres 111, 112 étant, dans l'exemple, formés par des rectangles métalliques maintenus par un support 115 et inscrits dans des plans sensiblement verticaux. Le premier cadre 111 est parfois qualifié de « cadre sinus », le deuxième cadre 112 étant qualifié de «cadre cosinus». L'antenne 100 comporte une troisième voie de réception sous la forme, dans l'exemple, d'un monopôle réalisé avec des tiges métalliques verticales 116, 117, 118, 119 placées sous les cadres 111, 112.

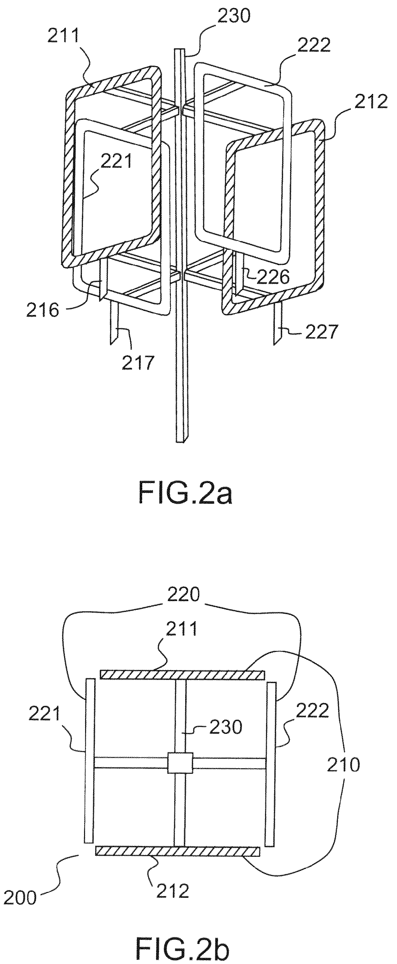

Les figures 2a et 2b présentent un deuxième exemple d'antenne à cadres croisés recevant les signaux traités par le procédé de mesure d'angle selon l'invention. La figure 2a est une vue en perspective de l'antenne, la figure 2b montrant l'antenne vue de dessus.

L'antenne 200 comporte deux paires 210, 220 de cadres maintenues par un support 230, les cadres de chaque paire 210, 220 étant parallèles entre-eux, les cadres 211, 212 de la première paire 210 étant orthogonaux aux cadres 221, 222 de la deuxième paire 220, tous les cadres 211, 212, 221, 222 de l'antenne étant, dans l'exemple, des rectangles métalliques inscrits dans des plans sensiblement verticaux. Dans l'exemple, les paires 210, 220 de cadres sont maintenues autour du support 230 de telle manière qu'elle forment sensiblement un carré vu de dessus. Dans l'exemple, l'antenne comporte également, sous chaque cadre 211, 212, 221, 222, une tige métallique 216, 217 226, 227, sensiblement verticale, l'ensemble de ces tiges 216, 217 226, 227 formant la voie monopôle de l'antenne. Cette antenne est, d'un point de vue théorique, équivalente à l'antenne présentée en figures 1a, 1b. Par la suite, on parlera de « cadre sinus » et de « cadre cosinus » en référence au premier modèle d'antenne présenté en figures 1a, 1b, ce vocabulaire s'appliquant aux paires 210, 220 de cadres 211, 212, 221, 222 lorsque le procédé est mis en oeuvre sur le deuxième modèle d'antenne présenté en figures 2a, 2b.

Selon un autre mode de mise en oeuvre du procédé selon l'invention, l'antenne à cadres croisés est remplacée par un réseau antennaire de type Adcock, ce type de réseau antennaire pouvant être modélisé de manière analogue aux antennes à cadres croisés, c'est-à-dire au moins par un cadre sinus et un cadre cosinus.

Par ailleurs, le monopôle de l'antenne peut être remplacé par un dipôle ou tout autre antenne servant de voie de référence.

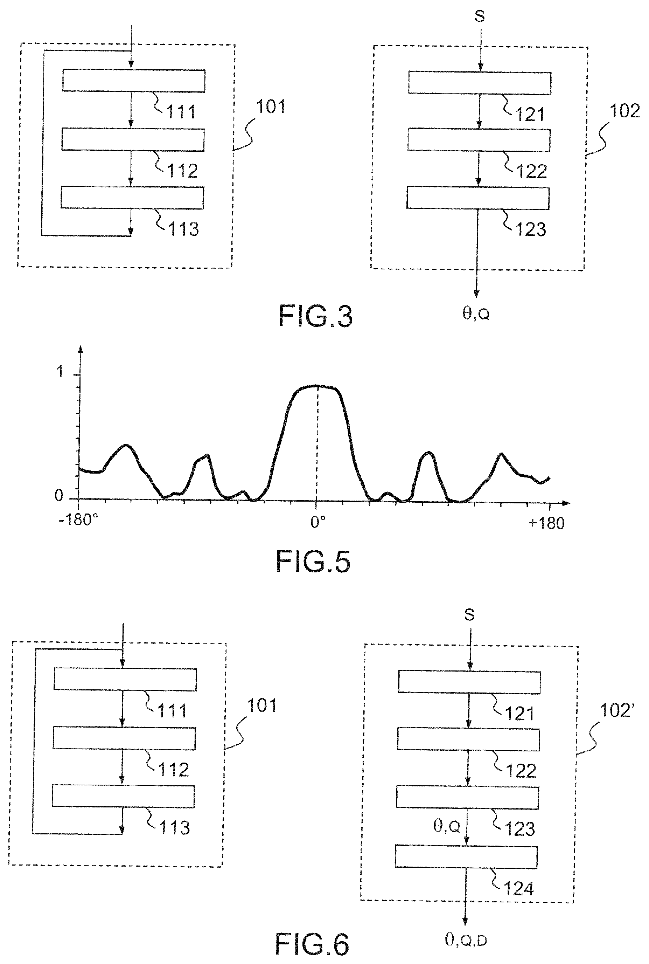

La figure 3 présente, à travers un synoptique, les étapes d'un procédé de mesure d'angle selon l'invention.

Les étapes du procédé sont réparties en deux phases 101, 102. La première phase 101 est une phase préparatoire de calibration de l'antenne et la seconde phase 102 est une phase de mesure au cours de laquelle on cherche à déterminer la direction d'arrivée d'un signal reçu par l'antenne. L'antenne à cadres croisés comprend, dans l'exemple, deux cadres orthogonaux et un monopôle.

La première phase 101 de calibration est menée dans les conditions d'utilisation finale de l'antenne. Par exemple, si dans les conditions habituelles d'utilisation, des structures physiques sont situées à proximité de l'antenne, la calibration est conduite en présence desdites structures, celles-ci étant susceptibles de modifier la réponse de l'antenne en créant des couplages électromagnétiques particuliers. Des signaux électromagnétiques de calibration sont émis en direction de l'antenne en faisant varier leur fréquence d'émission et leur angle de gisement d'arrivée. Dès lors, une table de calibration peut être remplie en enregistrant les réponses de l'antenne à des signaux variant en fréquences et en gisement.

Par exemple, un émetteur fixe est placé à distance d'un navire comportant une antenne à cadres croisés. L'émetteur est commandé pour émettre des signaux en balayant une bande de fréquence à calibrer, puis le navire est déplacé pour faire varier l'angle de gisement d'arrivée des signaux sur l'antenne. L'antenne ne doit pas être déplacée par rapport au navire pendant la phase de calibration 101, faute de quoi les conditions électromagnétiques de réception seraient faussées. Par ailleurs l'angle de site d'arrivée des signaux sur l'antenne de réception est choisi pour correspondre aux cas d'emploi du procédé de mesure d'angle selon l'invention. Par exemple, si le procédé est utilisé par des navires pour déterminer la direction d'arrivée de signaux émis par d'autres navires, l'angle de site choisi pour la calibration sera nul ou quasi-nul.

Par ailleurs, dans des cas d'utilisation particuliers, la fréquence du signal de calibration est maintenue fixe, notamment lorsqu'on souhaite uniquement détecter des signaux spécifiques dont la fréquence est connue à l'avance.

Plus précisément, la phase de calibration 101 de la figure 3 comporte une première étape 111 d'acquisition et de détection de signaux, une deuxième étape 112 de calcul d'un vecteur d'acquisition correspondant aux signaux émis, et une troisième étape 113 de stockage du vecteur d'acquisition dans la table de calibration. Dans l'exemple, ces trois étapes 111, 112, 113 sont exécutées pour un angle de gisement fixé et pour des fréquences d'émission variant dans le domaine des hautes fréquences, puis ces étapes 111, 112, 113 sont réitérées avec des angles de gisement différents, jusqu'à ce que tous les angles de gisement souhaités soient couverts.

Lors de la première étape 111, des fréquences d'acquisition sont choisies parmi les fréquences d'émission des signaux. Ensuite, pour chaque fréquence d'acquisition F choisie, le signal de fréquence F reçu par l'antenne à cadres croisés est acquis sur trois voies : une voie monopôle $X_0$, une voie correspondant au premier cadre $X_c$ de l'antenne, parfois qualifié de « cadre cosinus », et une voie correspondant au deuxième cadre $X_s$ de l'antenne parfois qualifié de « cadre sinus ». De préférence, plusieurs mesures de signaux sont acquises successivement sur ces trois voies $X_0$, $X_c$, $X_s$, cette première étape 111 d'acquisition de signaux étant alors, de préférence, exécutée sur une durée $\Delta t_{cal}$ suffisamment longue pour acquérir une série de plusieurs mesures, mais suffisamment courte pour que l'angle de gisement d'arrivée des signaux ne change quasiment pas au cours de la série de mesures si l'antenne est mobile par rapport à l'émetteur de signaux. Ainsi, à l'issue de la première étape 111, N acquisitions $X_{0,1}$,..., $X_{0,N}$ sur la voie monopôle, N acquisitions $X_{c,1}$,....., $X_{c,N}$ sur la voie cosinus et N acquisitions $X_{s,1}$,...., $X_{s,N}$ sur la voie sinus sont réalisées pour chaque fréquence F d'acquisition.

Lors de la deuxième étape 112, pour chaque fréquence F d'acquisition, un vecteur X d'intercorrélation entre les trois voies et ramené à une voie de référence, est calculé. Pour une observation k, $1 \le k \le N$, le vecteur d'intercorrélation élémentaire $X_k$ correspondant aux acquisitions de l'observation k est déterminé comme suit :

$$X_k = \frac{1}{\left\| X_{0,k} \right\|^2} \cdot \begin{pmatrix} X_{0,k}.X_{0,k}^H \\ X_{0,k}.X_{c,k}^H \\ X_{0,k}.X_{s,k}^H \end{pmatrix}$$

$X_{0,k}$ étant la mesure complexe acquise sur le monopôle, $X_{c,k}$ étant la mesure complexe acquise sur le cadre cosinus, $X_{s,k}$ étant la mesure complexe acquise sur le cadre sinus, $H$ étant l'opérateur hermitien. La voie de référence choisie dans l'exemple est la voie correspondant au monopôle. Dans d'autres mises en oeuvres du procédé de mesure d'angle selon l'invention, la voie de référence choisie est celle du cadre sinus ou du cadre cosinus.

Dans l'exemple, le vecteur d'intercorrélation X est calculé en moyennant les mesures acquises sur un nombre s d'observations, $s \le N$, de manière à limiter l'influence du bruit sur le vecteur d'intercorrélation X :

$$X = \frac{1}{s} \sum_{k=1}^{s} X_k$$

En outre, le vecteur d'intercorrélation X est, de préférence, normalisé à 1 :

$$X_{norm} = \frac{X}{\left\| X \right\|}$$

Lors de la troisième étape 113, pour chaque fréquence F d'acquisition, des données caractérisant les signaux acquis sont stockées dans la table de calibration. Dans l'exemple, ces données caractérisantes sont stockées sous la forme des vecteurs d'intercorrélation normalisés $X_{norm}$, calculés précédemment pour chaque fréquence d'acquisition F. La table de calibration est ainsi alimentée avec les vecteurs d'intercorrélation normalisés formés à partir de détections et acquisitions de signaux de fréquences différentes.

La première étape 111, la deuxième étape 112 et la troisième étape 113 sont réitérées successivement pour des signaux d'angles de gisement d'arrivée différents, de sorte qu'à l'issue de la phase de calibration 101, pour chaque fréquence d'acquisition, p vecteurs d'intercorrélation normalisés $X_{norm}(\theta_1)$, ... , $X_{norm}(\theta_p)$ sont stockés, chacun desdits vecteurs correspondant à un signal reçu avec un angle de gisement d'arrivée $\theta_1$, ... , $\theta_p$ différent. C'est pourquoi un vecteur d'intercorrélation stocké dans la table de calibration est par la suite qualifié de « vecteur directionnel ».

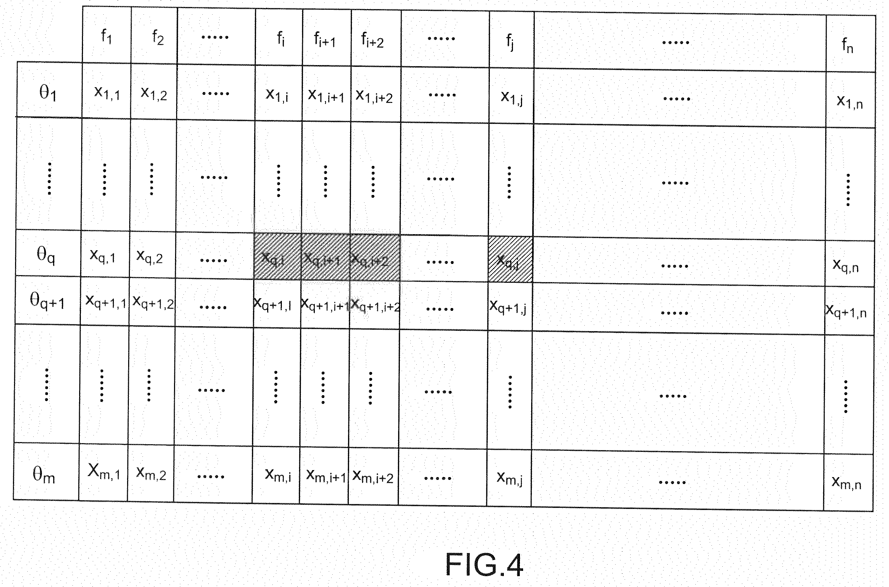

La figure 4 présente un tableau illustrant une table de calibration enregistrant des vecteurs d'acquisitions sur une bande de fréquence $[f_1 ; f_n]$ et pour des angles de gisement variant de $\theta_1$ à $\theta_m$.

Selon un autre mode de mise en oeuvre de la phase de calibration 101, la première étape 111, la deuxième étape 112 et la troisième étape 113 sont exécutées pour une fréquence fixe et pour des angles de gisement variant. Les étapes 111, 112, 113 sont ensuite réitérées en modifiant la fréquence d'émission. Par exemple, un émetteur mobile est déplacé autour de l'antenne, l'émetteur modifiant sa fréquence d'émission après l'accomplissement d'un tour complet, de sorte qu'après q tours, q fréquences différentes sont calibrées.

Une fois la phase de calibration 101 effectuée, une ou plusieurs phases de mesure 102 peuvent être exécutées. Une phase de mesure 102 permet de déterminer la direction d'arrivée en gisement d'un signal détecté. La phase de mesure 102 de la figure 3 comporte une première étape 121 de détection et d'acquisition d'un signal, une deuxième étape 122 de calcul d'un vecteur d'acquisition, une troisième étape 123 de corrélation entre le vecteur d'acquisition et des vecteurs issus de la calibration.

Lors de la première étape 121, le signal reçu est acquis sur une durée $\Delta t$ et découpé en plusieurs canaux fréquentiels. A l'issue de la première étape 121, une ou plusieurs acquisitions du signal sont effectuées pour chaque canal fréquentiel et, de préférence, sur les trois voies de l'antenne.

Lors de la deuxième étape 122, un vecteur d'intercorrélation est calculé à partir des acquisitions effectuées au cours de la première étape 121. Le vecteur d'intercorrélation est calculé selon le même procédé que celui décrit plus haut pour la deuxième étape 112 de la phase de calibration. A l'issue de cette deuxième étape 122, on obtient pour chaque canal fréquentiel à analyser, un vecteur d'acquisition $X_{norm}$ formé à partir des signaux acquis par l'antenne.

Lors de la troisième étape 123, des calculs de corrélation vectorielle sont exécutés pour déterminer la direction d'arrivée des signaux reçus par l'antenne. Dans l'exemple, le critère de corrélation utilisé est le carré du module du produit scalaire complexe entre vecteurs d'acquisition. Aussi, pour chaque canal fréquentiel analysé, les vecteurs directionnels correspondant à des angles de gisement différents et à une fréquence proche de ce canal fréquentiel et consignés dans la table de calibration sont identifiés, puis le carré du module des produits scalaires complexes entre le vecteur d'acquisition $X_{norm}$ formé à partir du signal acquis par l'antenne sur ce canal fréquentiel et chacun desdits vecteurs directionnels identifiés est calculé. Pour chaque canal fréquentiel, le maximum de ce module est recherché, le vecteur directionnel de la table de calibration permettant d'atteindre ce maximum étant considéré comme celui correspondant à l'angle d'arrivée du signal reçu comme l'indique l'expression

suivante :

$$\theta(f) = \arg\max_k \left( \left| X_{norm} \cdot T(f, \theta_k) \right|^2 \right)$$

où f est, dans l'exemple, la fréquence centrale du canal fréquentiel utilisé, $X_{norm}$ le vecteur d'acquisition du signal dont on souhaite déterminer la direction d'arrivée, et $T(f, \theta_k)$ un vecteur directionnel consigné dans la table de calibration et correspondant à un signal de fréquence f arrivant sur l'antenne avec un angle de gisement θ.

En sortie de la phase de mesure 102, une mesure θ d'angle de gisement est obtenue pour chaque canal fréquentiel analysé. Par ailleurs, une note de qualité Q est associée à chaque mesure θ d'angle de gisement obtenue, cette note étant liée au niveau atteint par le critère de corrélation. En effet, une note maximale est obtenue lorsque les vecteurs $X_{norm}$ et $T(f, \theta)$ sont colinéaires, une note moindre étant obtenue lorsque l'angle formé entre les vecteurs $X_{norm}$ et $T(f, \theta)$ augmente. Dans l'exemple, Q est donné par la relation suivante :

$$Q(f) = \max_k \left( \left| X_{norm} \cdot T(f, \theta_k) \right|^2 \right)$$

où , « · » représente le produit scalaire complexe.

Plusieurs angles de gisement différents peuvent être déterminés, si par exemple plusieurs émetteurs dans des directions différentes émettent simultanément des signaux.

Selon une mise en oeuvre du procédé de mesure selon l'invention, un angle de gisement d'arrivée θ plus précis est obtenu en calculant une valeur interpolée à partir de quelques valeurs d'angle de gisement $\theta_i$ autour du maximum de corrélation. A titre d'exemple, une interpolation quadratique peut être effectuée à partir des trois valeurs autour du maximum obtenu.

Dans l'exemple de la figure 6, lors de la phase de mesure 102, des signaux sont détectés par l'antenne sur une bande de fréquences s'étalant de $f_i$ à $f_j$, où $1 \leq i < j \leq n$. Pour plusieurs fréquences dans la plage $[f_i ; f_j]$ des calculs de corrélation sont effectués et des couples (fréquence, angle de gisement) sont identifiés par la recherche du maximum de corrélation. Ces couples sont représentés en hachuré sur la figure 4, laquelle montre que les signaux détectés arrivent tous avec un même angle de gisement égal à $\theta_q$, $1 \leq q \leq m$.

La figure 5 illustre, par un graphique, un exemple de courbe de corrélation obtenue en exécutant un procédé de mesure d'angle selon l'invention. Le critère de corrélation variant entre 0 et 1 est représenté en ordonnée, tandis que l'angle de gisement est représenté en abscisse. Dans l'exemple de la figure 5, la direction d'arrivée du signal est à 0° puisque le maximum de corrélation est obtenu pour cet angle.

La figure 6 présente, à travers un synoptique, les étapes d'une deuxième mise en oeuvre du procédé de mesure d'angle selon l'invention. Par rapport au procédé présenté en figure 3, une étape supplémentaire 124 de test est ajoutée dans la phase de mesure 102'. Comme décrit plus haut, plus le critère de corrélation est élevé, meilleure est considérée la mesure θ de l'angle de gisement d'arrivée du signal. Aussi, cette étape de test 124 invalide la mesure d'angle de gisement d'arrivée si le critère de corrélation est inférieur à un seuil préalablement choisi. Dans l'exemple, un indicateur D est produit par l'étape de test 124. Lorsque le critère est inférieur au seuil, l'indicateur D est mis à 0, sinon l'indicateur D est mis à 1. Ainsi, des valeurs peu fiables peuvent être identifiées puis écartées immédiatement et ne risquent pas d'induire l'utilisateur en erreur.

Un avantage du procédé de mesure d'angle selon l'invention est sa simplicité de mise en oeuvre. Une fois, la phase de calibration effectuée, un simple calculateur peut être utilisé pour effectuer des calculs de corrélation, les couplages électromagnétiques parasites étant alors implicitement pris en compte dans les calculs. En effet, le procédé de mesure d'angle selon l'invention ne s'appuie pas uniquement sur un modèle théorique, mais il tient compte de la réponse réelle de l'antenne mesurée dans son contexte environnant.

Un autre avantage du procédé de mesure d'angle selon l'invention est qu'il permet de diminuer automatiquement l'influence des signaux incidents dont l'angle de site ne correspond pas à l'angle de site choisi pour la calibration. Si par exemple, des ondes ionosphériques sont reçues par l'antenne, les signaux portés par ces ondes sont naturellement écartés par l'étape de corrélation vectorielle 123 car la corrélation effectuée sur ces signaux ne concorde pas avec le modèle enregistré dans la table de calibration. Cet avantage peut, par exemple, être exploité dans le cas d'un système de surveillance au sol ou en mer dédié à la détection d'émissions radioélectriques émises seulement à partir d'un émetteur placé au niveau du sol. Dans ce cas, seules les émissions à site nul ou quasi-nul seront correctement corrélées.

**Revendications**

1. Procédé de mesure de l'angle d'arrivée en gisement θ de signaux radioélectriques en bande HF reçus par une antenne à cadres croisés ou un réseau antennaire de type Adcock, comportant au moins les étapes suivantes :

• lors d'une phase de calibration (101) préparatoire, acquérir et enregistrer les mesures par l'antenne d'un signal de calibration variant en gisement et de fréquence fixe ou variable ;
• lors d'une phase de mesure (102) de signaux détectés :

o acquérir les signaux détectés sur au moins un canal de fréquence ;

o pour chaque canal de fréquence $f_i$, corréler les signaux acquis avec les enregistrements issus de la calibration de fréquence proche de $f_i$ et déterminer la direction d'arrivée des signaux en recherchant l'angle de gisement $\theta$ pour lequel le maximum de corrélation est atteint.

dans lequel, lors de la phase de calibration, chaque acquisition est enregistrée dans une table sous la forme d'un vecteur d'intercorrélation, les vecteurs de ladite table étant ensuite corrélés avec un autre vecteur d'intercorrélation issu des signaux acquis en phase de mesure (102), chacun desdits vecteurs d'intercorrélation étant calculé en exécutant au moins les étapes suivantes :

o acquérir, au moins sur le cadre sinus et le cadre cosinus de l'antenne, N mesures de signaux, $N \geq 1$, sur une durée $\Delta t$ ;
o pour p mesures parmi les N mesures effectuées précédemment, calculer un vecteur d'intercorrélation élémentaire $X_k$ ;
o calculer un vecteur d'intercorrélation moyen X en moyennant les p vecteurs d'intercorrélation élémentaires $X_k$ calculés précédemment,

le procédé étant **caractérisé en ce qu'**un vecteur d'intercorrélation élémentaire $X_k$ issu d'une mesure k est égal à

$$X_k = \frac{1}{\|X_{0,k}\|^2} \cdot \begin{pmatrix} X_{0,k} \cdot X_{0,k}^H \\ X_{0,k} \cdot X_{c,k}^H \\ X_{0,k} \cdot X_{s,k}^H \end{pmatrix},$$

$X_{0,k}$ étant la mesure complexe acquise sur le monopôle, $X_{c,k}$ étant la mesure complexe acquise sur le cadre cosinus, $X_{s,k}$ étant la mesure complexe acquise sur le cadre sinus, $H$ étant l'opérateur hermitien.

2. Procédé de mesure selon la revendication 1, **caractérisé en ce que** le critère de corrélation croît avec le module du produit scalaire entre le vecteur d'intercorrélation des signaux détectés et le vecteur d'intercorrélation des signaux acquis pendant la phase de calibration (101).

3. Procédé de mesure selon la revendication 1 ou 2, **caractérisé en ce qu'**il comporte en outre une étape d'estimation de la qualité d'une mesure de gisement

$\theta$, une note de qualité Q étant attribuée à ladite mesure en fonction du niveau du maximum de corrélation obtenu, ladite note Q étant une fonction monotone croissante du maximum de corrélation.

4. Procédé de mesure selon la revendication 3, **caractérisé en ce qu'**il comporte en outre une étape d'identification des mesures erronées, un seuil minimal étant choisi, une comparaison étant effectuée entre ledit seuil et la note de qualité Q attribuée à une mesure pour identifier une mesure dont la note de qualité Q est inférieure audit seuil.

5. Procédé de mesure selon l'une des revendications précédentes, l'antenne étant fixée sur un navire, **caractérisé en ce que** la phase de calibration (101) est effectuée en émettant des signaux à partir d'un émetteur fixe disposé sensiblement au niveau de la mer, de sorte que les signaux émis soient reçus par l'antenne à site quasi-nul, le navire se déplaçant à distance dudit émetteur en changeant de cap pour faire varier les angles de gisement d'arrivée du signal par rapport à l'antenne.

6. Procédé de mesure selon l'une des revendications précédentes, **caractérisé en ce que** lors de la phase de calibration (101), le signal de calibration est émis de sorte que l'angle de site d'arrivée dudit signal sur l'antenne à cadres croisés est sensiblement constant.

7. Procédé de surveillance mis en oeuvre sur une plate-forme en mer ou au sol, **caractérisé en ce qu'**il comporte au moins les étapes suivantes :

o à angle de site sensiblement nul, définir une plage de directions en gisement $[\theta_i ; \theta_f]$ à surveiller ;
o si des signaux sont détectées, exécuter les étapes du procédé de mesure de la direction d'arrivée en gisement de signaux selon l'une des revendications précédentes ;
o si un signal est détecté dans la plage surveillée, déclencher une commande d'alerte.

8. Goniomètre mettant en oeuvre le procédé de mesure selon l'une des revendications 1 à 6.

9. Système de surveillance disposé sur un navire et mettant en oeuvre le procédé selon la revendication 7.

**Patentansprüche**

1. Verfahren zum Messen des Ankunftswinkels $\theta$ im Hinblick auf Lage von radioelektrischen Signalen im HF-Band, empfangen mit einer Kreuzrahmenantenne oder einem Antennenfeld des Adcock-Typs, das wenigstens die folgenden Schritte beinhaltet:

    • Erfassen und Registrieren, in einer präparativen Kalibrierungsphase (101), der Messwerte, durch die Antenne, eines im Hinblick auf Lage variierenden Kalibrationssignals, und mit fester oder variabler Frequenz;
    • in einer Messphase (102) der erkannten Signale:

        o Erfassen der erkannten Signale auf wenigstens einem Frequenzkanal;
        ∘ Korrelieren, für jeden Frequenzkanal $f_i$, der erfassten Signale mit den Registuerungen, die sich aus der Frequenzkalibrierung nahe $f_i$ ergeben, und Ermitteln der Ankunftsrichtung von Signalen durch Suchen des Winkels $\theta$ im Hinblick auf Lage, für den das Korrelationsmaximum erreicht wird,

wobei in der Kalibrationsphase jede Erfassung in einer Tabelle in Form eines Interkorrelationsvektors registriert wird, wobei die Vektoren der Tabelle dann mit einem anderen Interkomelationsvektor von in der Messphase (102) erfassten Signalen registriert werden, wobei jeder der Interkorrelationsvektoren unter Ausführung wenigstens der folgenden Schritte berechnet wird:

        ∘ Erfassen, wenigstens am Sinusrahmen und am Kosinusrahmen der Antenne, von N Signalmesswerten, $N \geq 1$, über eine Dauer $\Delta t$;
        o Berechnen, für p Messungen unter den N zuvor durchgeführten Messungen, eines elementaren Interkorrelationsvektors $X_k$;
        ∘ Berechnen eines mittleren Interkorrelationsvektors X durch Mitteln der zuvor berechneten p elementaren Interkorrelationsvektoren $X_k$,

wobei das Verfahren **dadurch gekennzeichnet ist, dass** ein elementarer Interkorrelationsvektor $X_k$ von einer Messung k gleich:

$$X_k = \frac{1}{\|X_{0,k}\|^2} \cdot \begin{pmatrix} X_{0,k} \cdot X_{0,k}^H \\ X_{0,k} \cdot X_{c,k}^H \\ X_{0,k} \cdot X_{s,k}^H \end{pmatrix}$$

ist,
wobei $X_{0,k}$ der an dem Monopol erfasste komplexe Messwert ist, $X_{c,k}$ der am Kosinusrahmen erfasste komplexe Messwert ist, $X_{s,k}$ der am Sinusrahmen erfasste komplexe Messwert ist, $^H$ der hermitesche Operator ist.

2. Messverfahren nach Anspruch 1, **dadurch gekennzeichnet, dass** das Korrelationskriterium mit dem Modul des skalaren Produktes zwischen dem Interkorrelationsvektor von erkannten Signalen und dem Interkorrelationsvektor von Signalen zunimmt, die während der Kalibrationsphase (101) erfasst werden.

3. Messverfahren nach Anspruch 1 oder 2, **dadurch gekennzeichnet, dass** es ferner einen Schritt des Schätzens der Qualität einer Lagemessung θ beinhaltet, wobei eine Qualitätsnote Q dem Messwert in Abhängigkeit vom Niveau des erhaltenen Korrelationsmaximums zugeordnet wird, wobei die Note Q eine Funktion ist, die monoton vom Korrelationsmaximum zunimmt.

4. Messverfahren nach Anspruch 3, **dadurch gekennzeichnet, dass** es ferner einen Schritt des Identifizierens falscher Messwerte beinhaltet, wobei ein minimaler Schwellenwert gewählt wird, wobei ein Vergleich zwischen dem Schwellenwert und der Qualitätsnote Q durchgeführt wird, der einem Messwert zugeordnet wird, um einen Messwert zu identifizieren, dessen Qualitätsnote Q kleiner als die Schwelle ist.

5. Messverfahren nach einem der vorherigen Ansprüche, wobei die Antenne an einem Schiff befestigt ist, **dadurch gekennzeichnet, dass** die Kalibrationsphase (101) durch Aussenden von Signalen von einem im Wesentlichen auf Meeresspiegelniveau angeordneten festen Sender erfolgt, so dass die ausgesendeten Signale von der Antenne auf einer Elevation von quasi null empfangen werden, wobei sich das Schiff in einer Entfernung von dem Sender unter Kursänderung bewegt, damit sich die Ankunftslagewinkel des Signals mit Bezug auf die Antenne ändern.

6. Messverfahren nach einem der vorherigen Ansprüche, **dadurch gekennzeichnet, dass** während der Kalibrationsphase (101) das Kalibrationssignal so ausgesendet wird, dass der Ankunftselevationswinkel des Signals an der Antenne mit Kreuzrahmen im Wesentlichen konstant ist.

7. Überwachungsverfahren, ausgeführt auf einer Plattform im Meer oder an Land, **dadurch gekennzeichnet, dass** es wenigstens die folgenden Schritte beinhaltet:

    o Definieren, bei einem Elevationswinkel von im Wesentlichen null, eines Bereichs von zu überwachenden Lagerichtungen [$\theta_i$; $\theta_f$];

o Ausführen, wenn Signale erkannt werden, der Schritte des Verfahrens zum Messen der Ankunftsrichtung von Signalen im Hinblick auf Lage nach einem der vorherigen Ansprüche;
o Auslösen, wenn ein Signal in dem überwachten Bereich erkannt wird, eines Alarmbefehls.

8. Winkelmesser, der das Messverfahren nach einem der Ansprüche 1 bis 6 ausführt.

9. Überwachungssystem, das auf einem Schiff angeordnet ist und das Verfahren nach Anspruch 7 ausführt.


**Claims**

1. A method of measuring the bearing angle of arrival θ of HF band radio signals received by a crossed loop antenna or an Adcock antenna array, including at least the following steps:

    • in a preparatory calibration phase (101), acquiring and recording the measurements made by the antenna of a calibration signal which varies in its bearing and has a fixed or variable frequency;
    • in a phase (102) of measuring detected signals:

        o acquiring the detected signals in at least one frequency channel;
        o for each frequency channel $f_i$, correlating the acquired signals with the recorded signals resulting from the frequency calibration close to $f_i$, and determining the direction of arrival of the signals by finding the bearing angle θ for which the maximum correlation is obtained.

    in which each acquisition in the calibration phase is recorded in a table in the form of an intercorrelation vector, the vectors in this table being subsequently correlated with another intercorrelation vector obtained from the signals acquired in the measurement phase (102), each of the intercorrelation vectors being calculated by executing at least the following steps:

        o acquiring, at least on the sine loop and the cosine loop of the antenna, N signal measurements, where N ≥ 1, over a time interval Δt;
        o for p measurements out of the N measurements made previously, calculating an elementary intercorrelation vector $X_k$;
        o calculating a mean intercorrelation vector X by finding the mean of the p elementary intercorrelation vectors $X_k$ calculated previ-

ously.

the method being **characterized in that** an elementary intercorrelation vector $X_k$ based on a measurement k is defined thus:

$$X_k = \frac{1}{\|X_{0,k}\|^2} \cdot \begin{pmatrix} X_{0,k} \cdot X_{0,k}^H \\ X_{0,k} \cdot X_{c,k}^H \\ X_{0,k} \cdot X_{s,k}^H \end{pmatrix},$$

where $X_{0,k}$ is the complex measurement acquired on the monopole, $X_{c,k}$ is the complex measurement acquired on the cosine frame, $X_{s,k}$ is the complex measurement acquired on the sine frame, and $^H$ is the Hermitian operator.

2. The measurement method as claimed in claim 1, **characterized in that** the correlation criterion increases with the modulus of the scalar product of the intercorrelation vector of the detected signals and the intercorrelation vector of the signals acquired during the calibration phase (101).

3. The measurement method as claimed in claim 1 or 2, **characterized in that** it additionally includes a step of estimating the quality of a bearing measurement θ, a quality score Q being assigned to this measurement as a function of the level of the maximum correlation obtained, this score Q being an increasing monotonic function of the maximum correlation.

4. The measurement method as claimed in claim 3, **characterized in that** it additionally includes a step of identifying erroneous measurements, a minimum threshold being chosen and a comparison being made between this threshold and the quality score Q assigned to a measurement to identify a measurement whose quality score Q is below the threshold.

5. The measurement method as claimed in one of the preceding claims, the antenna being fixed on a ship, **characterized in that** the calibration phase (101) is executed by transmitting signals from a fixed transmitter positioned substantially at sea level, in such a way that the transmitted signals are received by the antenna at an elevation angle of practically zero, the ship moving at a distance from the transmitter and its course being changed to vary the bearing angles of arrival of the signal with respect to the antenna.

6. The measurement method as claimed in one of the preceding claims, **characterized in that**, in the calibration phase (101), the calibration signal is transmitted in such a way that the angle of elevation of arrival of the signal at the crossed loop antenna is substantially constant.

7. A method of monitoring used on a platform at sea or on the ground, **characterized in that** it includes at least the following steps:

> o at an angle of elevation substantially equal to zero, defining a range of bearing directions $[\theta_i; \theta_f]$ to be monitored;
> o if signals are detected, executing the steps of the method of measuring the bearing direction of arrival of signals as claimed in one of the preceding claims;
> o if a signal is detected in the monitored range, triggering an alert command.

8. A goniometer using the measurement method as claimed in one of claims 1 to 6.

9. A monitoring system positioned on a ship and using the method as claimed in claim 7.

FIG.1a

FIG.1b

FIG.2a

FIG.2b

EP 2 344 902 B1

FIG.3

FIG.5

FIG.6

13

EP 2 344 902 B1

| | $f_1$ | $f_2$ | ..... | $f_i$ | $f_{i+1}$ | $f_{i+2}$ | ..... | $f_j$ | ..... | $f_n$ |
|---|---|---|---|---|---|---|---|---|---|---|
| $\theta_1$ | $x_{1,1}$ | $x_{1,2}$ | ..... | $x_{1,i}$ | $x_{1,i+1}$ | $x_{1,i+2}$ | ..... | $x_{1,j}$ | ..... | $x_{1,n}$ |
| ⋮ | ⋮ | ⋮ | ..... | ⋮ | ⋮ | ⋮ | ..... | ⋮ | ..... | ⋮ |
| $\theta_q$ | $x_{q,1}$ | $x_{q,2}$ | ..... | $x_{q,i}$ | $x_{q,i+1}$ | $x_{q,i+2}$ | ..... | $x_{q,j}$ | ..... | $x_{q,n}$ |
| $\theta_{q+1}$ | $x_{q+1,1}$ | $x_{q+1,2}$ | ..... | $x_{q+1,i}$ | $x_{q+1,i+1}$ | $x_{q+1,i+2}$ | ..... | $x_{q+1,j}$ | ..... | $x_{q+1,n}$ |
| ⋮ | ⋮ | ⋮ | ..... | ⋮ | ⋮ | ⋮ | ..... | ⋮ | ..... | ⋮ |
| $\theta_m$ | $x_{m,1}$ | $x_{m,2}$ | ..... | $x_{m,i}$ | $x_{m,i+1}$ | $x_{m,i+2}$ | ..... | $x_{m,j}$ | ..... | $x_{m,n}$ |

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6300905 B1